# EUROPÄISCHE PATENTSCHRIFT

(11) **EP 1 033 335 B1**
(45) Veröffentlichungstag und Bekanntmachung des Hinweises auf die Patenterteilung: **02.07.2003**
(21) Anmeldenummer: 00104237.3
(22) Anmeldetag: 01.03.2000
(51) Int. Cl.: B65G 39/02

(54) **Tragrolle für Rollenbahnen**
Support roller for roller conveyors
Rouleau porteur pour transporteurs à rouleaux

(30) Priorität: 03.03.1999 DE 19909370
(43) Veröffentlichungstag der Anmeldung: 06.09.2000
(73) Patentinhaber: Hanses GmbH, 59889 Eslohe (DE)
(72) Erfinder: Hanses, Stefan, 59889 Eslohe- Bremke (DE); Hanses, Andreas, 59889 Eslohe (DE)
(74) Vertreter: Fritz, Edmund Lothar, Dipl.-Chem.

(56) Entgegenhaltungen:
- DE-A- 2 229 918
- DE-A- 4 005 996
- DE-U- 29 807 355

## Beschreibung

Die vorliegende Erfindung betrifft einen Rohrkörper aus Metall, vorzugsweise Stahl und einen mit diesem verbindbaren Flansch aus Metall, vorzugsweise Stahl, welche dazu bestimmt sind, nach deren Verbinden eine Tragrolle für Rollenbahnen zu bilden, wobei der Rohrkörper dazu bestimmt ist die zylindrische Mantelfläche der Tragrolle zu bilden und wobei an dem Flansch ein in den Rohrkörper einschiebbarer etwa zylindrischer Sitz vorgesehen ist, wobei im Umfangsbereich des Sitzes wenigstens ein umlaufender Bereich mit Übermaß gegenüber dem Innendurchmesser des Rohrkörpers vorgesehen ist und der Sitz des Flansches in den Rohrkörper einpressbar ist.

Aus dem Stand der Technik sind Tragrollen für Rollenbahnen der vorgenannten Art bekannt. Diese werden beispielsweise für den innerbetrieblichen Transport eingesetzt. Je nach Ausbildung und Abmessungen kann eine solche Tragrolle für den Transport verschiedener Güter in Längsrichtung dienen, wobei mehrere Tragrollen in dieser Längsrichtung hintereinander angeordnet sind und eine Rollenbahn bilden. Die vorliegende Erfindung betrifft insbesondere entsprechend größer ausgebildete Tragrollen vorzugsweise aus Stahl, die für den Transport schwerer Güter geeignet sind.

Tragrollen für Rollenbahnen der eingangs genannten Gattung sind beispielsweise aus der Zeitschrift "Braunkohle, Wärme und Energie", Jahrgang 1954 Seite 57 bekannt. Das Einpressen des Sitzes des Flansches in den Rohrkörper erfordert jedoch nach diesem Stand der Technik Rohrkörper, die sehr genau gefertigt sind und nur geringe maßliche Toleranzen aufweisen. Solche Presspassungen sind nach diesem Stand der Technik nur möglich, wenn das Toleranzfeld von IT 8 nach ISO 286 nicht überschritten wird, insbesondere wenn es sich um Rohrkörper aus nicht fließfähigen Metallen, z. B. Stahl handelt. Beim Einpressen unter Verwendung von Rohrkörpern und Flanschen aus leichter verformbaren fließfähigen Materialien wie beispielsweise Kupfer, Messing, Aluminium wie sie z. B. für Nietverbindungen verwendet werden, sind andere Verhältnisse gegeben.

Die DE 32 15 888 A1 beschreibt ebenfalls Tragrollen für Rollenbahnen, bei denen ein Lagereinsatz in einen Rohrkörper eingepresst wird. Dort bestehen jedoch der Rohrabschnitt und der Lagereinsatz aus Kunststoff, so dass die Kräfteverhältnisse beim Einpressen im Falle einer Pressverbindung mit Rohrkörpern aus Metall, insbesondere Stahl nicht vergleichbar sind.

Bei den bislang bekannten Tragrollen für Rollenbahnen der genannten Art wird als nachteilig empfunden, dass die Montage relativ aufwendig ist. Aus Kostengründen werden in der Regel für den Rohrkörper der Tragrolle längsnahtgeschweißte Rohre verwendet. Diese haben fertigungsbedingt relativ große maßliche Toleranzen, wodurch der Vorgang des zentrischen Einbringens des Flansches mit seinem zylindrischen, einer Buchse ähnlichen Sitz in den Rohrkörper eine relativ aufwendige Montage erfordert, die in der Regel ein Nacharbeiten beziehungsweise eine Justierung erforderlich macht. Die Flansche tragen nämlich im allgemeinen einen Achsteil, welcher wiederum in einem Lager aufgenommen wird, der die Drehlagerung für die gesamte Tragrolle bildet. Hier ist eine genaue zentrisch justierte Lagerung notwendig, da es andernfalls zu einem zu großen Verschleiß an der Tragrolle oder der Lagerung kommt, und/oder durch die heute üblichen hohen Fördergeschwindigkeiten zu Unwuchten oder gar Beschädigung des Transportgutes kommen kann, insbesondere wenn diese für die Aufnahme und den Transport größerer Lasten ausgelegt ist.

Aus der DE-A-4005996 ist ein Walzenkörper für die Druckindustrie bekannt, der aus einem Rohr und zwei stirnseitigen Lagerzapfen besteht, welche durch koaxiales Fügen zusammengefügt werden, wobei zwischen Lagerzapfen und Rohr im Fügeführungsbereich ein Presspassungsübermaß zwischen dem Rohrinnendurchmesser und dem Lagerzapfenenddurchmesser besteht. Hier handelt es sich um eine
klassische Pressverbindung mit geringen Übermaßen zwischen den zu fügenden Teilen, die nur dann gegeben sind, wenn man für den Fügevorgang ein Präzisionsrohr einsetzt oder aber ein herkömmliches Rohr in aufwendiger Weise mechanisch bearbeitet. Längsnahtgeschweißte Rohre mit bedingt durch die Fertigung wesentlichen größeren maßlichen Toleranzen kann man nach dem aus diesem Dokument bekannten Verfahren nicht fügen. Da bei der bekannten Pressverbindung wegen des geringen Übermaßes zwischen dem Rohr und den Lagerzapfen noch keine stabile belastbare Verbindung erzielt wird, ist außerdem ein zusätzlicher Stauchvorgang vorgesehen, bei dem die Spitze des Rohrs verformt wird, so dass das Material in eine Rille des Lagerzapfens fließt.

Ausgehend von dem zuvor genannten Stand der Technik besteht die Aufgabe der vorliegenden Erfindung darin, einen Rohrkörper aus Metall, vorzugsweise Stahl und einen mit diesem Rohrkörper verbindbaren Flansch aus Metall, vorzugsweise Stahl zur Verfügung zu stellen, welche dazu bestimmt sind, nach deren Verbinden eine Tragrolle für Rollenbahnen zu bilden, gemäß der eingangs genannten Gattung, wobei die Montage eine zentrische Verbindung zwischen dem Rohrkörper und dem Flansch mit seinem zylindrischen Sitz auch bei Rohrkörpern mit erheblichen maßlichen Toleranzen, insbesondere längsnahtgeschweißten Rohren mit vertretbarem Aufwand ermöglicht, das heißt, dass die Rohre im Rohzustand verbleiben können.

Die Lösung dieser Aufgabe liefert ein Rohrkörper aus Metall und ein mit diesem Rohrkörper verbindbarer Flansch aus Metall der eingangs genannten Gattung mit den kennzeichnenden Merkmalen des Hauptanspruchs.

Die erfindungsgemäße Lösung fußt auf der Überlegung, daß der längsnahtgeschweißte Rohrkörper fertigungsbedingt maßliche Ungenauigkeiten aufweist. Eine Nacharbeitung des Rohrkörpers oder gesonderte Maßnahmen für die Zentrierung erübrigen sich dadurch, daß der Sitz der an dem Flansch angebracht ist, im Umfangsbereich neben dem umlaufenden Bereich mit Übermaß gegenüber dem Innendurchmesser des Rohrkörpers, in axialer Richtung anschließend wenigstens einen Bereich mit Untermaß gegenüber dem Innendurchmesser des Rohrkörpers aufweist. Der Sitz des Flansches ist erfindungsgemäß, je nachdem wie groß das Übermaß ist, mit entsprechendem Kraftaufwand in den Rohrkörper einpreßbar, beispielsweise durch hydraulisches Einpressen. Der beziehungsweise die Bereiche mit Übermaß an dem Sitz werden dabei gestaucht und es findet eine Verformung statt. Dadurch, daß in axialer Richtung auf einen Bereich des Übermaßes ein Bereich mit Untermaß folgt, kann das Material fließen und in den dadurch geschaffenen Freiraum ausweichen. Die Profilierung des Sitzes und die Bereiche mit Übermaß beziehungsweise Untermaß sind dabei erfindungsgemäß so gewählt, daß das Fließen des Materials erleichtert wird und genügend Raum zwischen dem Sitz und dem Inneren des Rohrkörpers vorhanden ist, um das verformte Material aufzunehmen. Es wird dabei betont, daß es sich im Rahmen der Erfindung bei dem Rohrkörper und bei dem Flansch mit seinem zylindrischen Sitz um Teile aus nicht elastischen Werkstoffen handelt, also Metall, vorzugsweise Stahl. Das erforderliche Übermaß wird so gewählt, daß den vorkommenden Toleranzen im Bereich des Innendurchmessers längsnahtgeschweißter Rohre ausreichend Rechnung getragen wird.

Bei den erfindungsgemäßen Tragrollen für Rollenbahnen ist zwischen Rohrkörper und Flansch eine Übermaßpassung entsprechend einem Toleranzfeld nach ISO 286 von IT 10 oder größer gegeben. Vorzugsweise liegt die Übermaßpassung im Toleranzfeld von IT 11, IT 12 oder größer. Bei längsnahtgeschweißten Rohren kommen häufig Abweichungen beim Rohrkörper vor, die um einige Größenordnungen über den angegebenen Werten liegen, wobei bei dem Rohrkörper nicht nur maßliche Toleranzen des Durchmessers sondern zusätzlich fertigungsbedingte Abweichungen von der Rundgenauigkeit zu berücksichtigen sind, wenn es sich um nach bestimmten Verfahren hergestellte längsnahtgeschweißte Rohre handelt. In diesem Fall können die Fertigungstoleranzen so erheblich sein, daß sich eine Übermaßpassung entsprechend einem Toleranzfeld von IT 15 bis IT 18 ergibt. Auch bei solchen maßlichen Abweichungen ist eine Preßverbindung zwischen Rohrkörper und Flansch bei der erfindungsgemäßen Lösung auch dann möglich, wenn Rohrkörper und Sitz des Flansches beispielsweise aus Stahl bestehen. Besonders vorteilhaft ist gemäß einer Weiterbildung der Erfindung, wenn sich abwechselnde Bereiche mit Übermaß und Untermaß vorhanden sind, wobei weiterhin bevorzugt das Volumen des Bereichs mit Übermaß gegenüber dem Innendurchmesser des Rohrkörpers in etwa dem Volumen des Bereichs mit Untermaß entspricht, so daß das unter den Bedingungen des Einpressens fließende Material in den Bereich mit Untermaß ausweichen kann.

Eine bevorzugte Weiterbildung der Erfindung sieht vor, daß ein Bereich mit Übermaß im Profil gesehen etwa die Form eines Zahnes aufweist. Man kann beispielsweise den Bereich mit Übermaß mit einem Zahnprofil versehen, welches eine flacher geneigte Zahnflanke und eine steiler geneigte Zahnflanke aufweist. Versuche haben gezeigt, daß sich eine solche Zahnprofilierung des Sitzes beim Einpressen des Flansches in den Rohrkörper besonders vorteilhaft verhält. Vorzugsweise ist dabei die flache Zahnflanke in Einpreßrichtung vorderseitig und die steile Zahnflanke jeweils auf der Rückseite angeordnet. Das Volumen des Freiraums hinter der Zahnflanke reicht aus, um das Material der beim Einpressen des Sitzes in den Rohrkörper quasi flachgedrückten Zahnspitze aufzunehmen. Abweichend von der hier dargestellten Zahnform sind auch andere geometrische Formen denkbar, etwa ein ansteigender Radius mit anschließendem Freistich.

Eine weitere bevorzugte Weiterbildung der Erfindung sieht vor, daß der Flansch am Umfang mehrere über den Umfang verteilt angeordnete nach außen hin offene Aussparungen aufweist. In der Regel liegt bei diesen Tragrollen für Rollenbahnen im eingepreßten Zustand der Flansch an der Stirnseite des Rohrkörpers an und fluchtet außen etwa mit dem Rohrkörper. Die reine Einpreßverbindung zwischen Flansch und Sitz beziehungsweise Rohrkörper genügt bei manchen Anwendungen nicht zur Schaffung einer ausreichend verdrehfesten Verbindung zwischen Flansch und Rohrkörper, die entsprechend höhere Kräfte aufnehmen kann. Deshalb wird zusätzlich in diesen Fällen eine Schweißverbindung zwischen Flansch und Rohrkörper, das heißt Flansch und Stirnseite des Rohrkörpers hergestellt. Um auch hier den Arbeitsaufwand bei der Fertigung zu verringern, sieht eine bevorzugte Variante der Erfindung vor, daß die Aussparungen am Umfang des Flansches vorhanden sind, um Schweißmaterial zum Beispiel von einem Schweißdraht aufzunehmen und so die Schweißverbindung zwischen Flansch und Rohrkörper herzustellen. Nach dem Schweißvorgang steht dann der geschmolzene Schweißdraht nicht oder nur wenig nach außen hin über, da dieses Material in die Ausnehmungen des Flansches fließt. Diese Verbindungstechnik ist zeitsparend gegenüber einer Verschweißung mit ringsum laufender Schweißnaht.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: eine Ansicht eines erfindungsgemäßen Flansches von der Seite;
- Fig. 2: eine Vorderansicht des Flansches von Fig. 1 in Richtung des Pfeils II von Fig. 1 gesehen;
- Fig. 3: eine Darstellung von Flansch und Rohrkörper vor dem Einpressen des Sitzes;
- Fig. 4: eine entsprechende Darstellung nach dem Einpressen des Sitzes des Flansches in den Rohrkörper;
- Fig. 5: eine stirnseitige Ansicht in Richtung des Pfeils V von Fig. 4 nach dem Schweißvorgang.

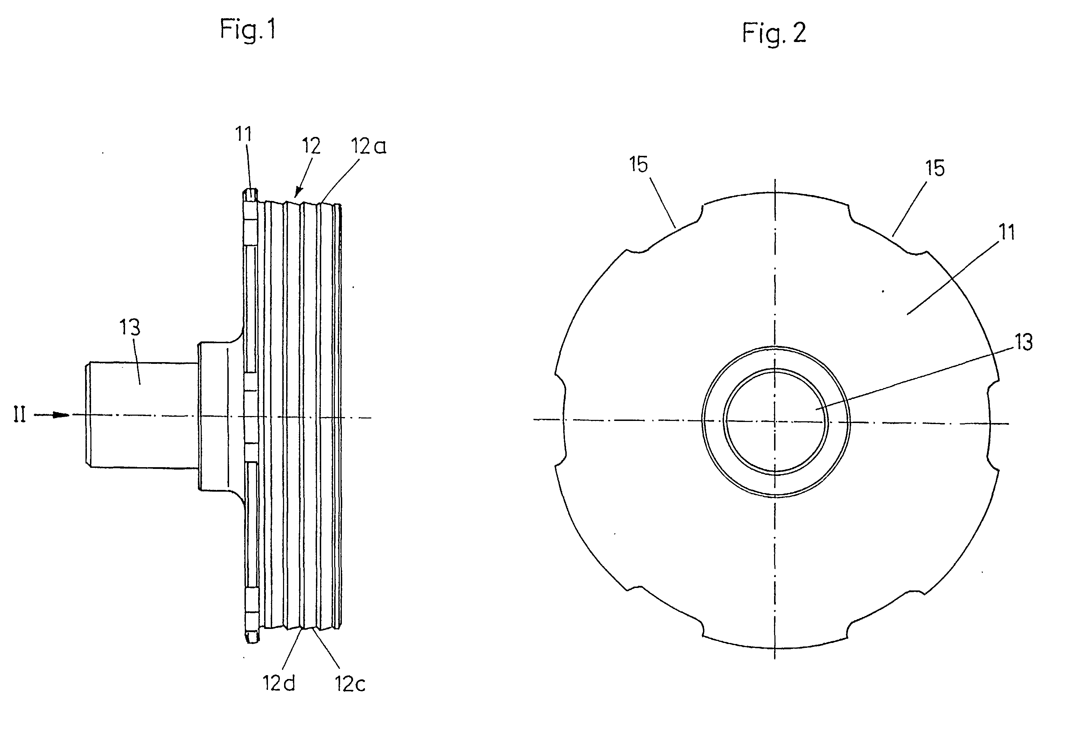

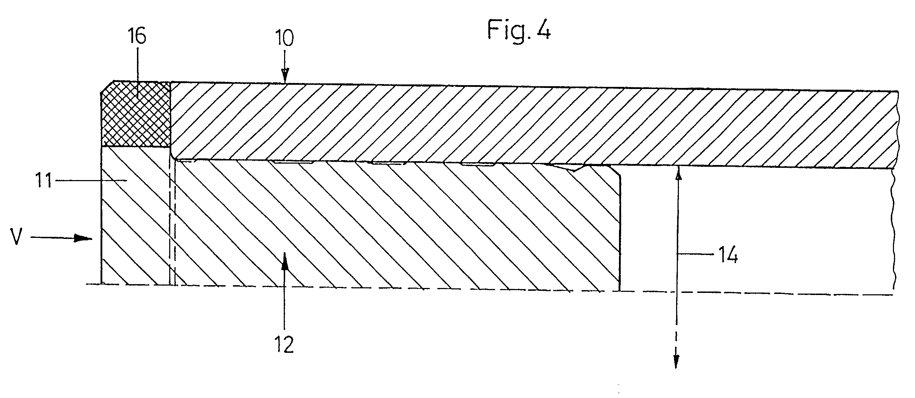

Zunächst wird auf Fig. 1 Bezug genommen. Die Darstellung zeigt eine stirnseitige Ansicht des Teiles der erfindungsgemäßen Tragrolle, der den Flansch aufweist. Der Flansch selbst ist dabei mit dem Bezugszeichen 11 bezeichnet. Von dem Flansch 11 aus erstreckt sich ein buchsenartiger Teil, der hierin als Sitz 12 bezeichnet wird und der in einen Rohrkörper 10 eingepreßt wird, wie später noch anhand von Fig. 4 näher erläutert werden wird. Bei der erfindungsgemäßen Tragrolle ist der Sitz 12 nicht glatt zylindrisch ausgebildet, sondern hat eine Art Zahnprofil. Die Bereiche der Spitzen des Zahnprofils sind mit 12a bezeichnet. Diese sind die Bereiche mit Übermaß. Die Flanken dieser Zähne des Zahnprofils sind unsymmetrisch ausgebildet in dem vorliegenden Ausführungsbeispiel, das heißt, die vorderen Zahnflanken 12c sind in ihrem Winkel flacher und die rückseitigen Zahnflanken 12d sind in ihrem Winkel steiler. Auf der anderen Seite des Flansches 11 schließt sich die Achse 13 an, die zentrisch angeordnet ist. Diese Achse 13 dient zur Drehlagerung der Tragrolle in einem Lager, welches hier nicht näher dargestellt ist und im Zusammenhang mit der vorliegenden Erfindung ohne Belang ist. Anstelle des Zapfens ist auch eine Passbohrung möglich, in die ein Lager eingesetzt werden kann, das dann z.B. eine durchgehende Welle aufnimmt.

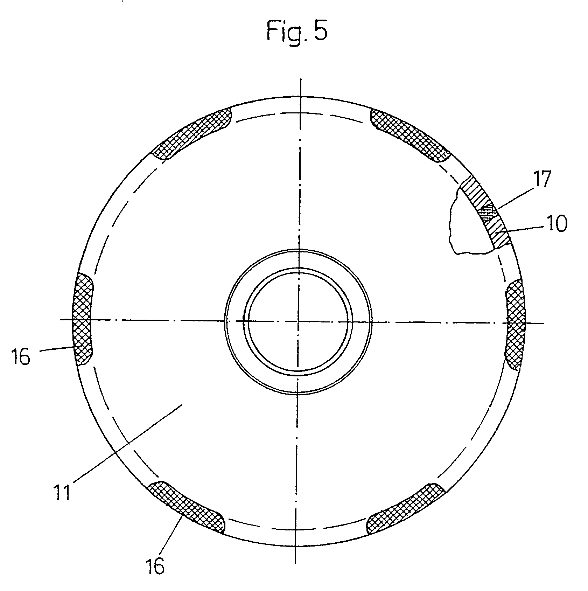

Fig. 2 zeigt die Ansicht des Flansches von der Stirnseite her gesehen. Man erkennt, daß der Flansch 11 am Umfang mehrere hier gleichmäßig über den Umfang verteilt angeordnete Aussparungen 15 aufweist, denen eine Bedeutung zukommt im Zusammenhang mit dem Schweißvorgang bei der Verbindung von Flansch 11 und Rohrkörper 10. Dies wird später noch unter Bezugnahme auf Fig. 5 genauer beschrieben. In dem vorliegenden Ausführungsbeispiel gemäß Fig. 2 sind insgesamt 6 solche Aussparungen vorhanden. Die genaue Anzahl der Aussparungen 15 ist aber ebensowenig wichtig, wie deren genaue Form. In der Regel sind die Aussparungen 15 muldenartige Vertiefungen, die nach außen hin offen sind. Die Anzahl und Umfangsbreite der Aussparungen 15 richtet sich auch nach der Festigkeit der gewünschten Schweißverbindung zwischen Flansch 11 und Rohrkörper 10.

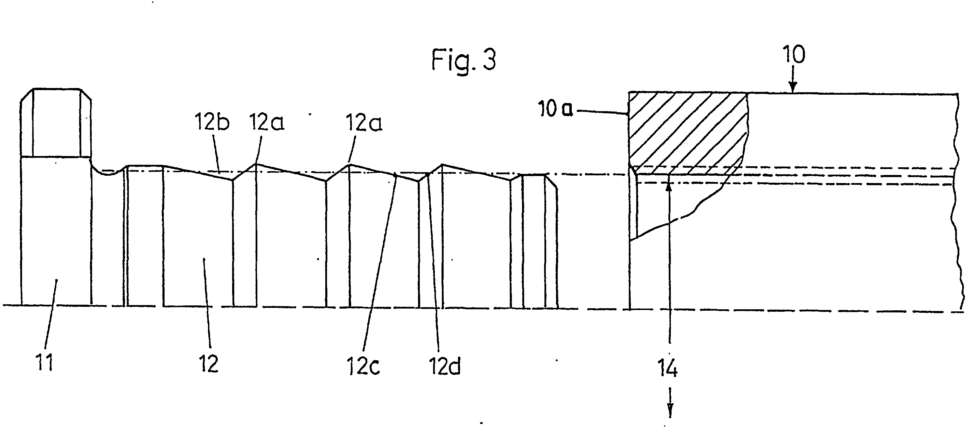

Nachfolgend wird nun auf die Fig. 3 und 4 Bezug genommen, die eine vergrößerte Darstellung des Verbindungsbereichs zwischen dem Rohrkörper 10, dem Flansch 11 und dem Sitz 12 zeigen, wobei sich anhand dieser Zeichnungen die Montage der erfindungsgemäßen Tragrolle aus diesen Teilen erläutern läßt. Der angedeutete Innendurchmesser in Fig. 4 des Rohrkörpers 10, der mit 14 bezeichnet ist, ist in der Regel so, daß dessen Maß etwas geringer ist als der Durchmesser des Sitzes 12 im Bereich der Zahnspitze des Zahnprofils. Dadurch ergeben sich die Bereiche 12a mit Übermaß gegenüber dem Innendurchmesser 14 des Rohrkörpers 10, die in der Zeichnung Fig. 4 entsprechend gekennzeichnet sind. Man erkennt in der Zeichnung weiterhin, daß zwischen zwei Bereichen 12a mit Übermaß bedingt durch die Form des Zahnprofils jeweils ein Bereich 12b mit Untermaß liegt gegenüber dem Innendurchmesser 14 des Rohrkörpers 10. Wird nun der Sitz 12 zum Beispiel hydraulisch in den Rohrkörper eingepreßt, dann drücken sich die Bereiche 12a mit Übermaß, das heißt die Spitzenbereiche des Zahnprofils flach. Der Bereich des Übermaßes und dementsprechend das gestauchte Volumen beim Einpressen ist dabei abhängig von der jeweiligen maßlichen Abweichung des Innendurchmessers 14 von einem normierten Wert entsprechend den vorkommenden Toleranzen. Durch die Bereiche 12b mit Untermaß ist gewährleistet, daß das gestauchte Material aus den Bereichen 12a mit Übermaß beim Einpressen des Sitzes 12 in den Rohrkörper 10 fließen kann und bei der Verformung genügend Platz zum Ausweichen des Materials ist, das ursprünglich die Bereiche der Zahnspitzen 12a und somit Bereiche mit Übermaß bildet. Für den Rohrkörper 10 werden längsnahtgeschweißte Rohre verwendet, die fertigungsbedingt entsprechende Toleranzen aufweisen sowie auch Unebenheiten und nicht exakt runde Bereiche zum Beispiel im Bereich der Schweißnaht. Nur durch eine Zahnform der beschriebenen Art in der Anordnung über den Durchmesser ist eine exakte Zentrierung des Einsatzes möglich, denn wenn der Zahn z.B. in Längsrichtung verläuft, würde durch die viel höhere Flächenpressung längs der Schweißnaht des Rohres der Einsatz aus seinem zentrischen Sitz gepreßt und so der Rundlauf erheblich verschlechtert. Die Längsnaht des Rohres ist in Fig. 5 mit 17 bezeichnet.

Fig. 5 zeigt die stirnseitige Ansicht der Tragrolle nach dem Schweißvorgang. Man erkennt, daß in die Aussparungen 15 des Flansches 11 hinein das Schweißmaterial, zum Beispiel Schweißdraht 16 fließen kann, so daß man nach Verbindung des Flansches 11 mit dem Rohrkörper 10 am äußeren Umfang einen sauberen Abschluß erhält.

Der Flansch 11 könnte auch komplett entfallen, dann müßten die Einsätze aber in einer Vorrichtung eingepreßt werden, um den korrekten Sitz zu gewährleisten. Der Einsatz würde in diesem Fall innenliegend im Rohr verschweißt. Das hätte zum einen Materialersparnis des Einsatzes zum Vorteil, zum anderen würde das Fräsen der Aussparungen 15 entfallen bei leicht erhöhtem Schweißaufwand.

## Patentansprüche

1. Rohrkörper aus Metall, vorzugsweise Stahl und mit diesem Rohrkörper (10) verbindbarer Flansch (11) aus Metall, vorzugsweise Stahl, welche dazu bestimmt sind, nach deren Verbinden eine Tragrolle für Rollenbahnen zu bilden, wobei der Rohrkörper (10) dazu bestimmt ist die zylindrische Mantelfläche der Tragrolle zu bilden und wobei an dem Flansch (11) ein in den Rohrkörper (10) einschiebbarer etwa zylindrischer Sitz (12) vorgesehen ist, wobei im Umfangsbereich des Sitzes (12) wenigstens ein umlaufender Bereich mit Übermaß gegenüber dem Innendurchmesser des Rohrkörpers (10) vorgesehen ist und der Sitz des Flansches (11) in den Rohrkörper (10) einpressbar ist, **dadurch gekennzeichnet, dass** zwischen Rohrkörper (10) und Flansch (11) eine Übermaßpassung entsprechend einem Toleranzfeld nach ISO 286 von IT 10 oder größer gegeben ist und dass in axialer Richtung auf einen Bereich mit Übermaß (12a) wenigstens ein Bereich (12b) mit Untermaß gegenüber dem Innendurchmesser (14) des Rohrkörpers (10) folgt.

2. Rohrkörper und Flansch nach Anspruch 1, **dadurch gekennzeichnet, dass** zwischen Rohrkörper (10) und Sitz (12) des Flansches (11) eine Übermaßpassung entsprechend einem Toleranzfeld nach ISO 286 von IT 11 oder größer, vorzugsweise von IT 12 oder größer gegeben ist.

3. Rohrkörper und Flansch nach Anspruch 1 oder 2, **dadurch gekennzeichnet, dass** der Rohrkörper (10) aus einem mit Längsnaht (17) geschweißten Rohr hergestellt ist.

4. Rohrköper und Flansch nach einem der Ansprüche 1 bis 3, **dadurch gekennzeichnet, dass** das Volumen des Bereichs mit Übermaß (12a) gegenüber dem Innendurchmesser (14) des Rohrkörpers (10) in etwa dem Volumen des Bereichs mit Untermaß (12b) entspricht.

5. Rohrkörper und Flansch nach Anspruch 4, **dadurch gekennzeichnet, dass** der Sitz (12) in axialer Richtung gesehen mehrere jeweils sich abwechselnde Bereiche mit Übermaß (12a) sowie Bereiche mit Untermaß (12b) aufweist.

6. Rohrkörper und Flansch nach einem der Ansprüche 1 bis 5, **dadurch gekennzeichnet, dass** ein Bereich mit Übermaß (12a) im Profil gesehen etwa die Form eines Zahnes aufweist.

7. Rohrkörper und Flansch nach Anspruch 6, **dadurch gekennzeichnet, dass** ein Bereich mit Übermaß (12a) mit Zahnprofil eine flacher geneigte Zahnflanke (12c) und eine steiler geneigte Zahnflanke (12d) aufweist.

8. Rohrkörper und Flansch nach Anspruch 7, **dadurch gekennzeichnet, dass** die flache Zahnflanke (12c) in Einpressrichtung vorderseitig und die steile Zahnflanke (12d) jeweils auf der Rückseite angeordnet ist.

9. Rohrkörper und Flansch nach einem der Ansprüche 1 bis 8, **dadurch gekennzeichnet, dass** im eingepressten Zustand der Flansch (11) an der Stirnseite (10a) des Rohrkörpers (10) anliegt und außen etwa mit dem Rohrkörper (10) fluchtet.

10. Rohrkörper und Flansch nach einem der Ansprüche 1 bis 9, **dadurch gekennzeichnet, dass** der Flansch (11) am Umfang mehrere über den Umfang verteilt angeordnete nach außen hin offene Aussparungen (15) aufweist für die Aufnahme von Schweißmaterial (16) zur Schweißverbindung mit dem Rohrkörper (10).

11. Rohrkörper und Flansch nach einem der Ansprüche 1 bis 10, **dadurch gekennzeichnet, dass** an der dem Rohrkörper (10) abgewandten Seite des Flansches (11) zentrisch eine Achse (13) vorgesehen ist.

## Claims

1. Tubular body of metal, preferably steel, and flange (11) of metal, preferably steel, which can be connected to this tubular body (10), the tubular body (10) and the flange (11), after they are connected, being intended for forming a carrying roller for roller conveyors, the tubular body (10) being intended to form the cylindrical lateral surface of the carrying roller, and an approximately cylindrical seat (12), which can be pushed into the tubular body (10), being provided on the flange (11), at least one encircling region with oversize relative to the inside diameter of the tubular body (10) being provided in the circumferential region of the seat (12), and it being possible for the seat of the flange (11) to be pressed into the tubular body (10), **characterized in that** there is an oversize fit in accordance with a tolerance zone according to ISO 286 of IT 10 or larger between tubular body (10) and flange (11), and **in that**, in the axial direction, at least one region (12b) with undersize relative to the inside diameter (14) of the tubular body (10) follows a region with oversize (12a).

2. Tubular body and flange according to Claim 1, **characterized in that** there is an oversize fit in accordance with a tolerance zone according to ISO 286 of IT 11 or larger, preferably of IT 12 or larger, between tubular body (10) and seat (12) of the flange (11).

3. Tubular body and flange according to Claim 1 or 2, **characterized in that** the tubular body (10) is produced from a tube welded with a longitudinal seam (17).

4. Tubular body and flange according to one of Claims 1 to 3, **characterized in that** the volume of the region with oversize (12a) relative to the inside diameter (14) of the tubular body (10) corresponds approximately to the volume of the region with undersize (12b).

5. Tubular body and flange according to Claim 4, **characterized in that** the seat (12), as viewed in the axial direction, has a plurality of in each case alternating regions with oversize (12a) and regions with undersize (12b).

6. Tubular body and flange according to one of Claims 1 to 5, **characterized in that** a region with oversize (12a), as viewed in profile, roughly has the shape of a tooth.

7. Tubular body and flange according to Claim 6, **characterized in that** a region with oversize (12a) having a tooth profile has a tooth flank (12c) inclined to a flatter degree and a tooth flank (12d) inclined to a steeper degree.

8. Tubular body and flange according to Claim 7, **characterized in that**, in the press-in direction, the flat tooth flank (12c) is arranged on the front side and the steep tooth flank (12d) is arranged in each case on the rear side.

9. Tubular body and flange according to one of Claims 1 to 8, **characterized in that**, in the pressed-in state, the flange (11) bears against the end face (10a) of the tubular body (10) and is approximately in alignment with the tubular body (10) on the outside.

10. Tubular body and flange according to one of Claims 1 to 9, **characterized in that** the flange (11), at the circumference, has a plurality of cut-outs (15) which are distributed over the circumference, open outwards and are intended for receiving welding material (16) for the welded connection to the tubular body (10).

11. Tubular body and flange according to one of Claims 1 to 10, **characterized in that** a spindle (13) is provided centrally on that side of the flange (11) facing away from the tubular body (10).

## Revendications

1. Corps tubulaire en métal, de préférence en acier et bride (11) en métal, de préférence en acier, qui peut être reliée à ce corps tubulaire (10), le corps et la bride étant destinés à former après leur liaison un rouleau porteur pour pistes à rouleaux, le corps tubulaire (10) étant destiné à former la surface cylindrique d'enveloppe du rouleau porteur et un siège sensiblement cylindrique (12) apte à être inséré dans le corps tubulaire (10) étant prévu sur la bride (11), au moins une zone périphérique présentant un déport positif par rapport au diamètre intérieur du corps tubulaire (10) étant prévue dans la région périphérique du siège (12) et le siège de la bride (11) pouvant être enfoncé dans le corps tubulaire (10), **caractérisé en ce qu'**entre le corps tubulaire (10) et la bride (11), il existe une adaptation du déport positif qui correspond à une plage de tolérance de IT 10 selon ISO 286 ou plus grande, et **en ce que** dans la direction axiale et **en ce qu'**au moins une zone (12b) présentant un déport négatif par rapport au diamètre intérieur (14) du corps tubulaire (10) suit dans la direction axiale une zone (12a) présentant un déport positif.

2. Corps tubulaire et bride selon la revendication 1, **caractérisés en ce qu'**entre le corps tubulaire (10) et le siège (12) de la bride (11), il existe une adaptation au déport positif qui correspond à une plage de tolérance de IT 11 selon ISO 286 ou plus grande, de préférence de IT 12 ou plus grande.

3. Corps tubulaire et bride selon la revendication 1 ou 2, **caractérisés en ce que** le corps tubulaire (10) est fabriqué à partir d'un tube soudé à cordon longitudinal (17).

4. Corps tubulaire et bride selon l'une des revendications 1 à 3, **caractérisés en ce que** le volume de la zone (12a) qui présente un déport positif par rapport au diamètre intérieur (14) du corps tubulaire (10) correspond sensiblement au volume de la zone (12b) qui présente un déport négatif.

5. Corps tubulaire et bride selon la revendication 4, **caractérisés en ce que**, vu dans la direction axiale, le siège (12) présente plusieurs zones (12a) avec déport positif et plusieurs zones (12b) à déport négatif alternées.

6. Corps tubulaire et bride selon l'une des revendications 1 à 5, **caractérisés en ce qu'**une zone (12a) à déport positif présente sensiblement la forme d'une dent lorsqu'elle est vue en profil.

7. Corps tubulaire et bride selon la revendication 6, **caractérisés en ce qu'**une zone (12a) à déport positif et profil en dent présente un flanc de dent (12c) à faible inclinaison et un flanc de dent (12d) à forte inclinaison.

8. Corps tubulaire et bride selon la revendication 7, **caractérisés en ce que** dans la direction d'enfoncement, le flanc de dent (12c) plat est situé à l'avant et le flanc de dent (12d) abrupt est situé en arrière.

9. Corps tubulaire et bride selon l'une des revendications 1 à 8, **caractérisés en ce que** lorsque la bride (11) est enfoncée, elle repose contre le côté frontal (10a) du corps tubulaire (10) et **en ce que** du côté extérieur, elle est sensiblement alignée sur le corps tubulaire (10).

10. Corps tubulaire et bride selon l'une des revendications 1 à 9, **caractérisés en ce que** la bride (11) présente à sa périphérie plusieurs découpes (15) réparties à la périphérie et ouvertes vers l'extérieur pour la réception de matériau de soudage (16) en vue de sa liaison soudée avec le corps tubulaire (10).

11. Corps tubulaire et bride selon l'une des revendications 1 à 10, **caractérisés en ce qu'**un axe (13) est prévu au centre du côté de la bride (11) qui n'est pas tourné vers le corps tubulaire (10).
